# FASCICULE DE BREVET EUROPEEN

(11) **EP 3 890 569 B1**
(45) Date de publication et mention de la délivrance du brevet: **24.04.2024**
(21) Numéro de dépôt: 19813549.3
(22) Date de dépôt: 05.12.2019
(51) Int. Cl.: A47J 27/04

(54) **ACCESSOIRE CUISEUR VAPEUR AVEC DISPOSITIF DE SUPPORT POURVU DE NERVURES**
DAMPFKOCHERZUBEHÖR MIT STÜTZVORRICHTUNG MIT RIPPEN
STEAM COOKER ACCESSORY WITH SUPPORT DEVICE PROVIDED WITH RIBS

(30) Priorité: 07.12.2018 FR 1872527
(43) Date de publication de la demande: 13.10.2021
(73) Titulaire: SEB S.A., 69130 Ecully (FR)
(72) Inventeur: ALLEMAND, Bernard, 70100 VELESMES ECHEVANNE (FR); FRADET, Gautier, 21120 ECHEVANNES (FR); SEURAT, Frédéric, 21490 BRETIGNY (FR)
(74) Mandataire: SEB Développement
(86) Numéro de dépôt international: PCT/EP2019/083890
(87) Numéro de publication internationale: WO 2020/115246

(56) Documents cités:
- WO-A1-2016/203129
- WO-A1-2018/115696
- CH-A1- 704 665
- FR-A1- 3 060 287
- FR-A5- 2 161 447
- IT-A1- UB20 154 796

## Description

### Domaine technique

La présente invention concerne le domaine technique des appareils et dispositifs de production de vapeur pour chauffer et/ou cuire des aliments à la vapeur.

La présente invention concerne plus particulièrement les accessoires cuiseur vapeur pour chauffer et/ou cuire à la vapeur des aliments contenus dans un récipient.

La présente invention concerne également les appareils pour chauffer et/ou cuire à la vapeur des aliments, comportant un récipient associé à un dispositif de production de vapeur formant un tel accessoire cuiseur vapeur.

### Technique antérieure

Il est connu, du document FR 3 060 286 A1 déposé par la demanderesse, un accessoire cuiseur vapeur pour chauffer et/ou cuire à la vapeur des aliments contenus dans un récipient. L'accessoire cuiseur vapeur comprend un générateur de vapeur comportant une chambre de production de vapeur reliée à une sortie de distribution de vapeur ménagée dans une partie inférieure du générateur de vapeur. L'accessoire cuiseur vapeur comporte un dispositif de support portant le générateur de vapeur et prévu pour reposer sur le récipient. Le dispositif de support comporte une paroi d'appui portant le générateur de vapeur. La paroi d'appui comporte une face inférieure présentant une zone d'appui prévue pour reposer sur le récipient.

Cependant, un tel accessoire cuiseur vapeur présente l'inconvénient d'avoir une paroi d'appui qui est susceptible de glisser sur le récipient si l'utilisateur ne positionne pas le récipient à l'horizontale ou si le bord supérieur du récipient est légèrement incliné. De plus, un environnement humide et chaud dans le récipient fermé par l'accessoire cuiseur vapeur pourrait diminuer le coefficient de frottement entre la paroi d'appui et un bord supérieur du récipient, provoquant facilement le glissement de l'accessoire cuiseur vapeur sur le récipient. Un tel accessoire cuiseur vapeur qui glisse sur le récipient pourrait entrainer des situations dangereuses pour l'utilisateur et son environnement.

Un accessoire cuiseur vapeur selon les caractéristiques du préambule de la revendication 1 est connu du document WO2018/115696.

### Exposé de l'invention

Un objet de la présente invention est de proposer un accessoire cuiseur vapeur utilisé avec un récipient pour chauffer et/ou cuire des aliments à la vapeur, qui peut être utilisé en toute sécurité.

Un autre objet de la présente invention est de proposer un accessoire cuiseur vapeur utilisé avec un récipient pour chauffer et/ou cuire des aliments à la vapeur, qui permet de mieux contrôler l'échappement de vapeur.

Un autre objet de la présente invention est de proposer un accessoire cuiseur vapeur utilisé avec un récipient pour chauffer et/ou cuire des aliments à la vapeur, qui présente une construction simple et économique.

Un autre objet de la présente invention est de proposer un cuiseur vapeur électrique pour chauffer et/ou cuire des aliments à la vapeur comportant un récipient et un accessoire cuiseur vapeur qui peut être utilisé en toute sécurité. Un autre objet de la présente invention est de proposer un cuiseur vapeur électrique pour chauffer et/ou cuire des aliments à la vapeur comportant un récipient et un accessoire cuiseur vapeur qui permet de mieux contrôler l'échappement de vapeur.

Un autre objet de la présente invention est de proposer un cuiseur vapeur électrique pour chauffer et/ou cuire des aliments à la vapeur comportant un récipient et un accessoire cuiseur vapeur qui présente une construction simple et économique.

### Résumé de l'invention

Ces objets sont atteints avec un accessoire cuiseur vapeur pour chauffer et/ou cuire à la vapeur des aliments contenus dans un récipient selon les caractéristiques de la revendication 1.

Cette disposition permet d'utiliser l'accessoire cuiseur vapeur avec des récipients de différentes tailles. Cette disposition permet également de déplacer l'accessoire cuiseur vapeur sur le récipient tout en conservant un appui entre l'accessoire cuiseur vapeur et le récipient. Ainsi, lorsque l'utilisateur dispose l'accessoire cuiseur vapeur sur le récipient contenant les aliments à chauffer et/ou à cuire, le bord supérieur du récipient est en contact avec la zone d'appui de la paroi d'appui. Si le récipient est placé sur un plan de travail incliné ou si le bord supérieur du récipient est légèrement incliné, l'accessoire cuiseur vapeur a tendance à glisser de manière involontaire sur le récipient. La présence de la nervure intérieure sur la face inférieure de la paroi d'appui présente l'avantage de bloquer l'accessoire cuiseur vapeur sur un côté intérieur du récipient au niveau de son bord supérieur en cas de glissement et d'éviter la chute de l'accessoire cuiseur vapeur.

Avantageusement, la nervure intérieure forme un anneau circulaire. Cette disposition présente l'avantage de bloquer efficacement le glissement de l'accessoire cuiseur vapeur dans toute direction dans le plan de la zone d'appui. Une telle caractéristique de l'invention permet également de mieux s'adapter à des récipients dont le bord supérieur est rond.

Avantageusement, le dispositif de support comporte une nervure extérieure s'étendant depuis la face inférieure et entourant la zone d'appui. Cette disposition présente l'avantage de bloquer l'accessoire cuiseur vapeur sur un côté extérieur du récipient au niveau de son bord supérieur en cas de glissement et d'éviter la chute de l'accessoire cuiseur vapeur.

Avantageusement, la nervure extérieure forme un anneau circulaire. Cette disposition présente l'avantage de bloquer efficacement le glissement de l'accessoire cuiseur vapeur dans toute direction dans le plan de la zone d'appui. Une telle caractéristique de l'invention permet également de mieux s'adapter à des récipients dont le bord supérieur est rond.

Avantageusement, la nervure extérieure est formée au niveau d'un bord périphérique de la paroi d'appui. Cette disposition présente une construction simple et économique à mettre en oeuvre.

Avantageusement, la paroi d'appui comporte au moins un orifice d'échappement de vapeur relié à l'évent par un circuit d'échappement. Cette disposition permet de mieux contrôler l'échappement de vapeur hors du récipient fermé par l'accessoire cuiseur vapeur.

Avantageusement, la paroi d'appui présente une cavité centrale sur la face inférieure dans laquelle est formé l'orifice d'échappement de vapeur. Cette disposition présente une construction simple à mettre en oeuvre.

Ces objets sont également atteints avec un cuiseur vapeur électrique, comportant un récipient pour contenir les aliments à chauffer et/ou à cuire, et un accessoire cuiseur vapeur prévu pour reposer sur le récipient et pour chauffer et/ou cuire à la vapeur les aliments contenus dans le récipient selon l'une au moins des caractéristiques précitées.

### Brève description des dessins

On comprendra mieux les buts, aspects et avantages de la présente invention, d'après la description donnée ci-après d'un mode particulier de réalisation de l'invention présenté à titre d'exemple non limitatif, en se référant aux dessins annexés dans lesquels :
La figure 1 illustre une vue en perspective éclatée d'un cuiseur vapeur électrique comportant un accessoire cuiseur vapeur et un récipient selon un mode particulier de réalisation de l'invention ;
La figure 2 illustre une vue en coupe de l'accessoire cuiseur vapeur illustré sur la figure 1, selon une ligne de coupe II-II ;
La figure 3 illustre une vue en coupe de l'accessoire cuiseur vapeur illustré sur la figure 1, selon une ligne de coupe III-III passant par un évent ;
La figure 4 illustre une vue de dessous de l'accessoire cuiseur vapeur illustré sur la figure 1 ;
La figure 5 illustre une vue en perspective d'une paroi d'appui de l'accessoire cuiseur vapeur illustré sur la figure 1 ;
La figure 6 illustre une autre vue en perspective de la paroi d'appui illustrée sur la figure 5 ;

### Description des modes de réalisation

Seuls les éléments nécessaires à la compréhension de l'invention ont été représentés. Pour faciliter la lecture des dessins, les mêmes éléments portent les mêmes références d'une figure à l'autre.

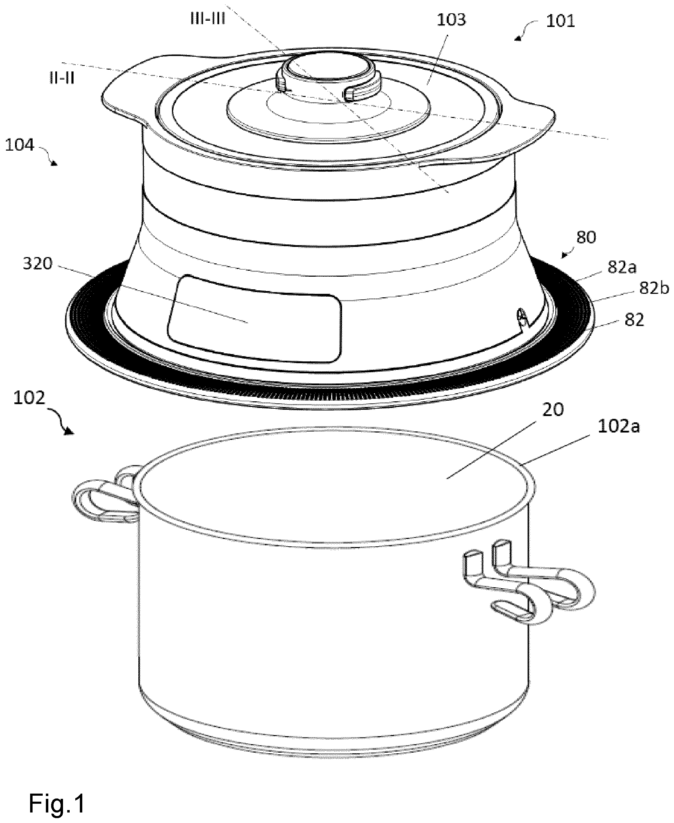

Le cuiseur vapeur électrique 101 illustré de manière schématique sur la figure 1 est un appareil pour chauffer et/ou cuire à la vapeur des aliments, comportant un récipient 102 pour contenir les aliments à chauffer et/ou à cuire, et un accessoire cuiseur vapeur 104 prévu pour reposer sur le récipient 102.

Plus particulièrement dans l'exemple de réalisation illustré sur les figures 1 à 3, l'accessoire cuiseur vapeur 104 est configuré pour chauffer et/ou cuire à la vapeur des aliments contenus dans le récipient 102. L'accessoire cuiseur vapeur 104 comporte un dispositif de support 80 prévu pour porter l'accessoire cuiseur vapeur 104, et pour reposer sur le récipient 102.

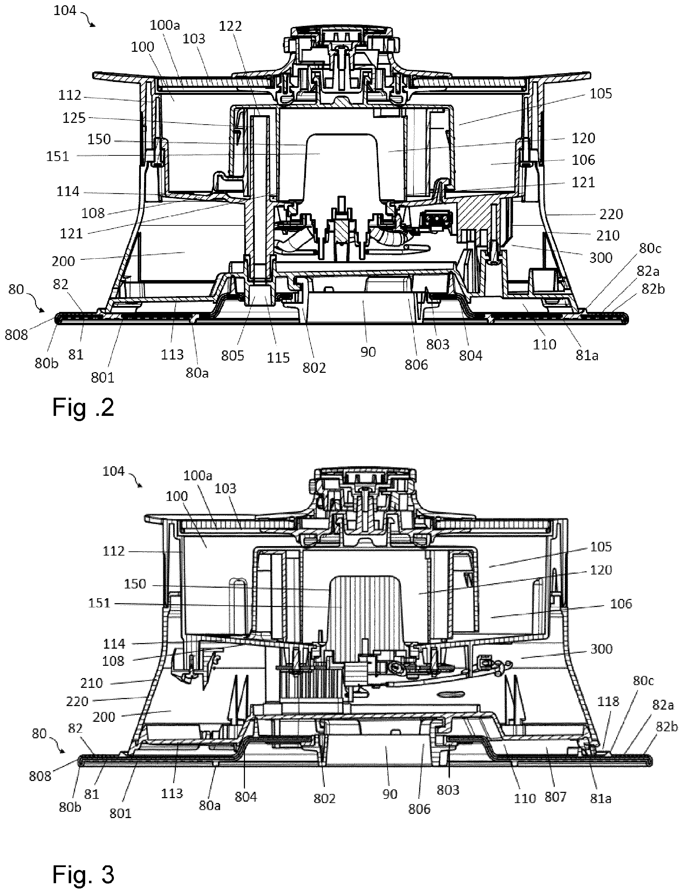

L'accessoire cuiseur vapeur 104 comprend une enceinte 100 présentant une paroi latérale extérieure 112 et une paroi de fond 114. L'enceinte 100 comporte un réservoir d'eau 106 délimité par la paroi latérale extérieure 112 et la paroi de fond 114. Le réservoir d'eau 106 communique avec l'extérieur par une ouverture supérieure 100a de l'enceinte 100. Tel que représenté sur la figure 2, l'accessoire cuiseur vapeur 104 comporte un couvercle 103 amovible qui ferme l'enceinte 100 au niveau de son ouverture supérieure 100a. Le couvercle 103 est mobile entre une position ouverte de l'enceinte 100 où le réservoir d'eau 106 est accessible depuis l'extérieur pour le remplissage d'eau et une position fermée de l'enceinte 100.

L'accessoire cuiseur vapeur 104 comporte un générateur de vapeur 105 alimentant en vapeur l'enceinte 100. Le générateur de vapeur 105 présente une chambre de production de vapeur 120. Le réservoir d'eau 106 alimente en eau la chambre de production de vapeur 120 par gravité. A cet effet le réservoir d'eau 106 communique par une entrée d'alimentation d'eau 121 avec la chambre de production de vapeur 120. Dans l'exemple de réalisation illustré sur la figure 2, le réservoir d'eau 106 communique avec la chambre de production de vapeur 120 par deux entrées d'alimentation d'eau 121.

De préférence, le réservoir d'eau 106 présente un fond 108 déversant vers les deux entrées d'alimentation d'eau 121. Le fond 108 est formé par la paroi de fond 114 de l'enceinte 100.

La chambre de production de vapeur 120 comporte un dispositif de chauffe 150 pour transformer en vapeur l'eau présente dans la chambre de production de vapeur 120. Dans l'exemple de réalisation illustré sur les figures 2 à 3, le dispositif de chauffe 150 comprend un plot chauffant 151. Selon un autre mode particulier de réalisation de l'invention, le dispositif de chauffe 150 peut notamment comporter un élément chauffant disposé sous une plaque de diffusion de chaleur et/ou dans une plaque de diffusion de chaleur formant au moins une partie du fond de la chambre de production de vapeur 120.

La chambre de production de vapeur 120 est reliée à une sortie de distribution de vapeur 115 ménagée dans une partie inférieure 110 du générateur de vapeur 105. A cet effet, la chambre de production de vapeur 120 communique avec une sortie d'évacuation de vapeur 122 disposée plus haut que l'entrée d'alimentation d'eau 121. La sortie d'évacuation de vapeur 122 communique par un conduit 125 avec la sortie de distribution de vapeur 115.

Avantageusement, le conduit 125 est vertical. A titre de variante le conduit 125 peut être descendant sans nécessairement être vertical. De préférence le conduit 125 est dépourvu de chicanes. En d'autres termes, le conduit 125 est descendant de manière continue, sans nécessairement être rectiligne.

Le générateur de vapeur 105 présente une paroi inférieure 113 dans laquelle est formée la sortie de distribution de vapeur 115. La chambre de production de vapeur 120 est agencée dans le générateur de vapeur 105 à distance de la paroi inférieure 113.

L'accessoire cuiseur vapeur 104 comprend un compartiment technique 200 agencé en dessous de l'enceinte 100 et situé entre la paroi de fond 114 de l'enceinte 100 et la paroi inférieure 113. Tel que visible aux figures 1 à 3, le compartiment technique 200 présente une paroi annulaire extérieure 210 s'étendant depuis une partie de col cylindrique relativement étroite vers une extrémité inférieure relativement large. L'accessoire cuiseur vapeur 104 comporte un dispositif de commande et d'affichage 300 disposé dans le compartiment technique 200. Le dispositif de commande et d'affichage 300 comporte un boîtier électronique de commande (non représenté sur les figures) présentant un écran de commande et d'affichage 320 qui est visible sur une face extérieure 220 de la paroi annulaire extérieure 210. Plus particulièrement, le dispositif de commande et d'affichage 300 est disposé à l'intérieur du compartiment technique 200 de manière hermétique et étanche, ce qui permet à la fois de garantir l'étanchéité des composants électroniques à l'intérieur du dispositif de commande et d'affichage 300 et d'éviter la condensation d'eau sur l'écran de commande et d'affichage 320.

De préférence, la paroi inférieure 113 est assemblée avec la paroi annulaire extérieure 210 et la paroi de fond 114, par exemple par vissage, par soudage, par clipsage ou par surmoulage.

Tel que visible aux figures 2 à 6, le dispositif de support 80 comporte une paroi d'appui 801 disposée en dessous de la paroi inférieure 113 et portant le générateur de vapeur 105. La paroi d'appui 801 comporte une face inférieure 81 prévue pour reposer sur le récipient 102. La face inférieure 81 présente une zone d'appui 81a configurée pour venir en appui sur un bord supérieur 102a du récipient 102. Tel que schématiquement représenté sur les figures 2 à 5, la zone d'appui 81a est plane et annulaire. Avantageusement, la paroi d'appui 801 est réalisée par une paroi métallique revêtue de silicone au moins sur la zone d'appui 81a de la face inférieure 81. Dans l'exemple de réalisation illustré sur les figures 1 à 6, la paroi d'appui 801 est entièrement revêtue en silicone. Avantageusement, la paroi d'appui 801 est de forme circulaire. A titre de variante, la paroi d'appui 801 peut être de forme, par exemple, rectangulaire, carrée, hexagonale, ovale, etc. pour mieux s'adapter à des récipients de formes différentes.

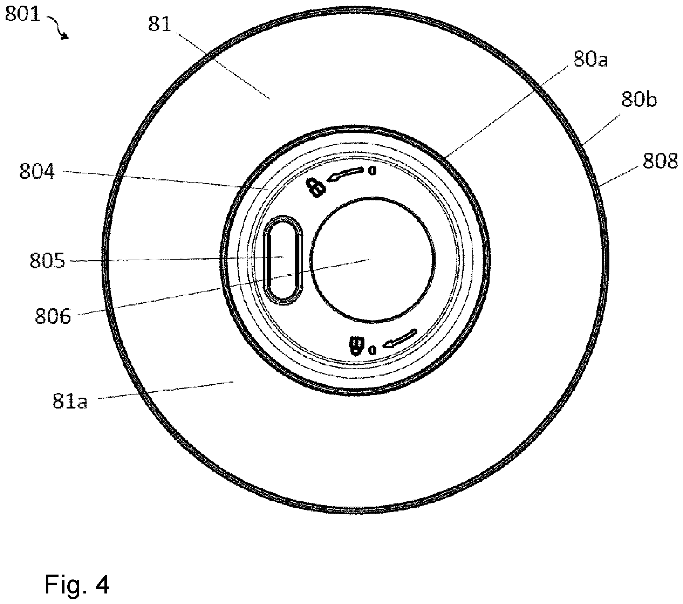

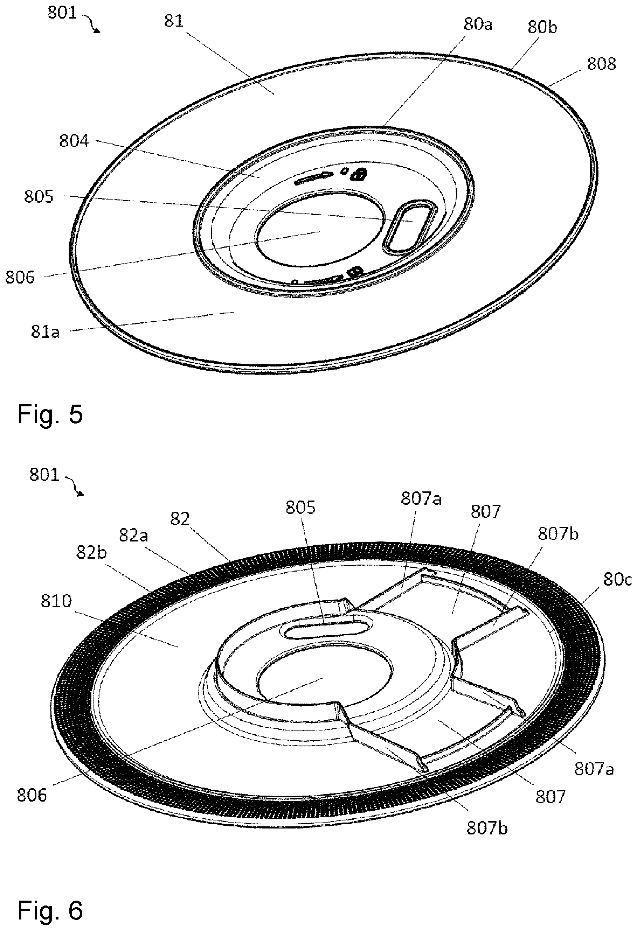

Le dispositif de support 80 comporte une nervure intérieure 80a formée par la paroi d'appui 801 et s'étendant depuis la face inférieure 81. La nervure intérieure 80a est entourée par la zone d'appui 81a. Tel que bien visible sur les figures 2 à 5, et particulièrement sur les figures 4 et 5, la zone d'appui 81a s'étend jusqu'à la nervure intérieure 80a. La nervure intérieure 80a forme un anneau circulaire. De surcroît, le dispositif de support 80 comporte une nervure extérieure 80b s'étendant depuis la face inférieure 81 et entourant la zone d'appui 81a. La nervure extérieure 80b forme également un anneau circulaire. La nervure extérieure 80b est formée au niveau d'un bord périphérique 808 de la paroi d'appui 801. A titre de variante, le dispositif de support 80 peut comporter plusieurs nervures intérieures 80a espacées radialement vers la nervure extérieure 80b sur la face inférieure 81 de la paroi d'appui 801. Selon un autre mode particulier de réalisation de l'invention, la nervure intérieure 80a et/ou la nervure extérieure 80b peuvent être formée par des butées ou des ergots.

La paroi d'appui 801 comporte une face supérieure 82 à l'opposé de la face inférieure 81. La face supérieure 82 présente une zone annulaire 82a entourant le générateur de vapeur 105. La zone annulaire 82a est plane. De préférence, la zone annulaire 82a est pourvue d'une pluralité de protubérances 82b faisant saillie depuis la face supérieure 82, permettant à l'utilisateur de saisir fermement la paroi d'appui 801.

Conformément aux figures 2 à 3, la paroi d'appui 801 comporte un orifice de distribution de vapeur 805 traversé par la sortie de distribution de vapeur 115. La sortie de distribution de vapeur 115 est formée dans la paroi inférieure 113. La paroi inférieure 113 est reliée à la sortie d'évacuation de vapeur 122 par le conduit 125 s'étendant de part et d'autre de la paroi de fond 114 de l'enceinte 100. A titre de variante la sortie de distribution de vapeur 115 est issue du conduit 125 traversant la paroi inférieure 113 et la paroi d'appui 801. Dans l'exemple de réalisation illustré sur les figures 5 à 6, l'orifice de distribution de vapeur 805 présente une forme oblongue.

Plus particulièrement, la paroi d'appui 801 est montée amovible par rapport au générateur de vapeur 105. Le dispositif de support 80 comprend un écrou de fixation 802 portant la paroi d'appui 801 et mobile entre une position verrouillée dans laquelle la paroi d'appui 801 est fixée sur la paroi inférieure 113 du générateur de vapeur 105 et une position déverrouillée dans laquelle la paroi d'appui 801 peut être démontée de la paroi inférieure 113.

L'écrou de fixation 802 est configuré pour traverser une ouverture centrale 806 de la paroi d'appui 801 et venir coopérer avec la paroi inférieure 113 pour réaliser le verrouillage et le déverrouillage de la paroi d'appui 801. Dans l'exemple de réalisation illustré sur les figures 2 à 3, l'écrou de fixation 802 est maintenu sur la paroi inférieure 113 par une liaison à baïonnette. De manière avantageuse, le dispositif de support 80 comporte une rondelle 803 disposée entre l'écrou de fixation 802 et la paroi d'appui 801.

Selon un autre mode particulier de réalisation de l'invention, la paroi d'appui 801 peut être fixée sur la paroi inférieure 113 par un système à aimant qui est dimensionné pour être fonctionnel dans un milieu à haute température.

Lorsque l'accessoire cuiseur vapeur 104 est disposé sur le récipient 102, une enceinte de cuisson 20 est délimitée par la paroi d'appui 801 et le récipient 102. Le dispositif de support 80 comporte au moins un orifice d'échappement de vapeur 90 configuré pour mettre en communication l'enceinte de cuisson 20 et l'extérieur de l'accessoire cuiseur vapeur 104. Plus particulièrement, l'orifice d'échappement de vapeur 90 est formé par l'écrou de fixation 802 traversant l'ouverture centrale 806. En se référant aux figures 4 à 5, la paroi d'appui 801 présente une cavité centrale 804 dans laquelle sont formés l'ouverture centrale 806 et l'orifice de distribution de vapeur 805, et dans laquelle est logé l'écrou de fixation 802 lorsque la paroi d'appui 801 est verrouillée sur la paroi inférieure 113. Avantageusement, la nervure intérieure 80a entoure la cavité centrale 804.

Tel que représenté à la figure 3, l'accessoire cuiseur vapeur 104 présente au moins un évent 118 formé entre la paroi d'appui 801 et le générateur de vapeur 105 et prévu pour mettre en communication l'orifice d'échappement de vapeur 90 et l'extérieur de l'accessoire cuiseur vapeur 104. L'orifice d'échappement de vapeur 90 est relié à l'évent 118 par un circuit d'échappement 807, mieux visible sur la figure 6. Le circuit d'échappement 807 est délimité par la paroi inférieure 113 et deux parois latérales 807a, 807b, les deux paroi latérales 807a, 807b étant disposées en parallèle et espacées l'une de l'autre sur la face supérieure 82 de la paroi d'appui 801. Selon l'exemple de réalisation illustré sur la figure 6, le dispositif de support 80 ménage deux circuits d'échappement 807 reliant respectivement deux évents 118 à l'orifice d'échappement de vapeur 90. A titre de variante, le dispositif de support 80 peut comporter plusieurs orifices d'échappement de vapeur 90.

Le dispositif de support 80 comporte une nervure supérieure 80c s'étendant depuis la face supérieure 82 et entourant l'évent 118. La nervure supérieure 80c délimite une zone de récupération 810 du condensat de la vapeur sortant du récipient.

Le cuiseur vapeur électrique 101 illustré sur la figure 1 et l'accessoire cuiseur vapeur 104 illustré sur les figures 1 à 6 fonctionnent et s'utilisent de la manière suivante.

Après avoir disposé les aliments dans le récipient 102, l'utilisateur dispose l'accessoire cuiseur vapeur 104 sur le récipient 102 en positionnant la zone d'appui 81a sur le bord supérieur 102a du récipient 102 pour former l'enceinte de cuisson 20. L'utilisateur enlève le couvercle 103 et remplit le réservoir d'eau 106 par l'ouverture supérieure 100a de l'enceinte 100. L'eau s'écoule par les deux entrées d'alimentation d'eau 121 dans la chambre de production de vapeur 120. De préférence, l'utilisateur remplit le réservoir d'eau 106 jusqu'à un niveau suffisamment inférieur à la sortie d'évacuation de vapeur 122, pour éviter que l'eau atteigne la sortie d'évacuation de vapeur 122 et s'écoule par le conduit 125. L'utilisateur met alors en marche le dispositif de chauffe 150 en appuyant sur l'écran de commande et d'affichage 320. La température de l'eau présente dans la chambre de production de vapeur 120 s'élève jusqu'à ce que de la vapeur soit produite. La vapeur produite dans la chambre de production de vapeur 120 s'échappe par la sortie d'évacuation de vapeur 122 pour atteindre la sortie de distribution de vapeur 115 en descendant par le conduit 125. La vapeur sortant de la sortie de distribution de vapeur 115 se répand dans l'enceinte de cuisson 20 du récipient 102 pour chauffer et/ou cuire les aliments.

Lorsque les aliments présents dans le récipient 102 sont saturés en vapeur, la vapeur s'échappe d'abord par l'orifice d'échappement de vapeur 90 ménagé dans l'écrou de fixation 802, puis par les deux circuits d'échappement 807 et enfin par les deux évents 118 avant d'atteindre l'extérieur de l'accessoire cuiseur vapeur 104. Une partie de la vapeur sortant du récipient 102 se condense en liquide dans un espace situé entre la paroi inférieure 113 du générateur de vapeur 105 et la paroi d'appui 801 du dispositif de support 80, et tombe dans la zone de récupération 810.

Si le récipient 102 est placé sur un plan de travail incliné ou si le bord supérieur 102a du récipient 102 est légèrement incliné, l'accessoire cuiseur vapeur 104 a tendance à glisser de manière involontaire sur le récipient 102. Le glissement de l'accessoire cuiseur vapeur 104 est arrêté soit par la nervure intérieure 80a de la paroi d'appui 801 sur un côté intérieur du récipient 102 au niveau de son bord supérieur 102a, soit par la nervure extérieure 80b de la paroi d'appui 801 sur un côté extérieur du récipient 102 au niveau de son bord supérieur 102a.

Bien entendu, l'invention n'est nullement limitée au mode de réalisation précédemment décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention tel que défini par les revendications.

## Revendications

1. Accessoire cuiseur vapeur (104) pour chauffer et/ou cuire à la vapeur des aliments contenus dans un récipient (102), l'accessoire cuiseur vapeur (104) comprenant un générateur de vapeur (105) comportant une chambre de production de vapeur (120) reliée à une sortie de distribution de vapeur (115) ménagée dans une partie inférieure (110) du générateur de vapeur (105), l'accessoire cuiseur vapeur (104) comportant un dispositif de support (80) portant le générateur de vapeur (105) et prévu pour reposer sur le récipient (102), le dispositif de support (80) comportant une paroi d'appui (801) portant le générateur de vapeur (105), la paroi d'appui (801) comportant une face inférieure (81) présentant une zone d'appui (81a) prévue pour reposer sur le récipient (102), l'accessoire cuiseur vapeur présentant au moins un évent (118) formé entre la paroi d'appui (801) et le générateur de vapeur (105) et prévu pour mettre en communication une enceinte de cuisson (20) délimitée par la paroi d'appui (801) et le récipient (102) avec l'extérieur de l'accessoire cuiseur vapeur (104), la paroi d'appui (801) comportant une face supérieure (82) à l'opposé de la face inférieure (81), **caractérisé en ce que** le dispositif de support (80) comporte une nervure intérieure (80a) s'étendant depuis la face inférieure (81) de la paroi d'appui (801), la nervure intérieure (80a) étant entourée par la zone d'appui (81a), la zone d'appui (81a) s'étendant jusqu'à la nervure intérieure (80a), et **en ce que** le dispositif de support (80) comporte une nervure supérieure (80c) s'étendant depuis la face supérieure (82) et entourant l'évent (118).

2. Accessoire cuiseur vapeur (104) selon la revendication 1, **caractérisé en ce que** la nervure intérieure (80a) forme un anneau circulaire.

3. Accessoire cuiseur vapeur (104) selon l'une des revendications 1 à 2, **caractérisé en ce que** le dispositif de support (80) comporte une nervure extérieure (80b) s'étendant depuis la face inférieure (81) et entourant la zone d'appui (81a).

4. Accessoire cuiseur vapeur (104) selon la revendication 3, **caractérisé en ce que** la nervure extérieure (80b) forme un anneau circulaire.

5. Accessoire cuiseur vapeur (104) selon l'une des revendications 3 à 4, **caractérisé en ce que** la nervure extérieure (80b) est formée au niveau d'un bord périphérique (808) de la paroi d'appui (801).

6. Accessoire cuiseur vapeur (104) selon l'une des revendications 1 à 5, **caractérisé en ce que** la paroi d'appui (801) comporte au moins un orifice d'échappement de vapeur (90) relié à l'évent (118) par un circuit d'échappement (807).

7. Accessoire cuiseur vapeur (104) selon la revendication 6, **caractérisé en ce que** la paroi d'appui (801) présente une cavité centrale (804) sur la face inférieure (81) dans laquelle est formé l'orifice d'échappement de vapeur (90).

8. Cuiseur vapeur électrique (101) comportant un récipient (102) pour contenir les aliments à chauffer et/ou à cuire et un accessoire cuiseur vapeur (104) prévu pour reposer sur le récipient (102) et pour chauffer et/ou cuire à la vapeur les aliments contenus dans le récipient (102), **caractérisé en ce que** l'accessoire cuiseur vapeur (104) est conforme à l'une des revendications 1 à 7.

## Patentansprüche

1. Dampfkocherzubehör (104) zum Erwärmen und/oder Kochen mit dem Dampf von in einem Behälter (102) enthaltenen Lebensmitteln, wobei das Dampfkocherzubehör (104) einen Dampferzeuger (105) umfasst, der eine Dampfproduktionskammer (120) umfasst, die mit einem Dampfabgabeauslass (115) verbunden ist, der in einem unteren Teil (110) des Dampferzeugers (105) angeordnet ist, wobei das Dampfkocherzubehör (104) eine Stützvorrichtung (80) umfasst, die den Dampferzeuger (105) stützt und zum Aufliegen auf dem Behälter (102) vorgesehen ist, wobei die Stützvorrichtung (80) eine Stützwand (801) umfasst, die den Dampferzeuger (105) trägt, wobei die Stützwand (801) eine untere Fläche (81) umfasst, die einen Stützbereich (81a) aufweist, der zum Aufliegen auf dem Behälter (102) vorgesehen ist, wobei das Dampfkocherzubehör mindestens eine Entlüftung (118) aufweist, die zwischen der Stützwand (801) und dem Dampferzeuger (105) gebildet und vorgesehen ist, um einen durch die Stützwand (801) abgegrenzten Kochraum (20) und den Behälter (102) mit der Außenseite des Dampfkocherzubehörs (104) in Kontakt zu bringen, wobei die Stützwand (801) eine obere Fläche (82) gegenüber der unteren Fläche (81) umfasst, **dadurch gekennzeichnet, dass** die Stützvorrichtung (80) eine innere Rippe (80a) umfasst, die sich von der unteren Fläche (81) der Stützwand (801) erstreckt, wobei die innere Rippe (80a) von einem Stützbereich (81a) umgeben ist, wobei der Stützbereich (81a) sich bis zu der inneren Rippe (80a) erstreckt, und dadurch, dass die Stützvorrichtung (80) eine obere Rippe (80c) umfasst, die sich von der oberen Fläche (82) erstreckt und die Entlüftung (118) umgibt.

2. Dampfkocherzubehör (104) nach Anspruch 1, **dadurch gekennzeichnet, dass** die innere Rippe (80a) einen kreisförmigen Ring bildet.

3. Dampfkocherzubehör (104) nach einem der Ansprüche 1 bis 2, **dadurch gekennzeichnet, dass** die Stützvorrichtung (80) eine äußere Rippe (80b) umfasst, die sich von der unteren Fläche (81) erstreckt und den Stützbereich (81a) umgibt.

4. Dampfkocherzubehör (104) nach Anspruch 3, **dadurch gekennzeichnet, dass** die äußere Rippe (80b) einen kreisförmigen Ring bildet.

5. Dampfkocherzubehör (104) nach einem der Ansprüche 3 bis 4, **dadurch gekennzeichnet, dass** die äußere Rippe (80b) auf Höhe eines Umfangsrands (808) der Stützwand (801) gebildet ist.

6. Dampfkocherzubehör (104) nach einem der Ansprüche 1 bis 5, **dadurch gekennzeichnet, dass** die Stützwand (801) mindestens eine Dampfabströmöffnung (90) umfasst, die durch einen Abströmkreislauf (807) mit der Entlüftung (118) verbunden ist.

7. Dampfkocherzubehör (104) nach Anspruch 6, **dadurch gekennzeichnet, dass** die Stützwand (801) auf der unteren Fläche (81) einen zentralen Hohlraum (804) aufweist, in dem die Dampfabströmöffnung (90) gebildet ist.

8. Elektrischer Dampfkocher (101), umfassend einen Behälter (102) zum Enthalten von zu erwärmenden und/oder zu kochenden Lebensmitteln, und ein Dampfkocherzubehör (104), das zum Aufliegen auf dem Behälter (102) und zum Erwärmen und/oder Kochen mit dem Dampf der in dem Behälter (102) enthaltenen Lebensmitteln vorgesehen ist, **dadurch gekennzeichnet, dass** das Dampkocherzubehör (104) einem der Ansprüche 1 bis 7 entspricht.

## Claims

1. A steam cooker accessory (104) for heating and/or steaming food contained in a container (102), the steam cooker accessory (104) comprising a steam generator (105) which comprises a steam-generating chamber (120) connected to a steam distribution outlet (115) provided in a lower part (110) of the steam generator (105), the steam cooker accessory (104) comprising a support device (80) which supports the steam generator (105) and which is intended to rest on the container (102), the support device (80) comprising a bearing wall (801) supporting the steam generator (105), the bearing wall (801) comprising a lower face (81) having a bearing zone (81a) intended to rest on the container (102), the steam cooker accessory having at least one vent (118) which is formed between the bearing wall (801) and the steam generator (105) and designed to bring a cooking chamber (20) delimited by the bearing wall (801) and the container (102) into communication with the outside of the steam cooker accessory (104), the bearing wall (801) comprising an upper face (82) opposite the lower face (81), **characterised in that** the support device (80) has an inner rib (80a) extending from the lower face (81) of the bearing wall (801), the inner rib (80a) being surrounded by the bearing zone (81a), the bearing zone (81a) extending to the inner rib (80a), and **in that** the support device (80) comprises an upper rib (80c) extending from the upper face (82) and surrounding the vent (118).

2. The steam cooker accessory (104) according to claim 1, **characterised in that** the inner rib (80a) forms a circular ring.

3. The steam cooker accessory (104) according to any one of claims 1 to 2, **characterised in that** the support device (80) comprises an outer rib (80b) extending from the lower face (81) and surrounding the bearing zone (81a).

4. The steam cooker accessory (104) according to claim 3, **characterised in that** the outer rib (80b) forms a circular ring.

5. The steam cooker accessory (104) according to any one of claims 3 to 4, **characterised in that** the outer rib (80b) is formed at a peripheral edge (808) of the bearing wall (801).

6. The steam cooker accessory (104) according to any one of claims 1 to 5, **characterised in that** the bearing wall (801) comprises at least one steam exhaust outlet (90) connected to the vent (118) by an exhaust circuit (807).

7. The steam cooker accessory (104) according to claim 6, **characterised in that** the bearing wall (801) has a central cavity (804) on the lower face (81) in which the steam exhaust outlet (90) is formed.

8. An electric steam cooker (101) comprising a container (102) for containing food to be heated and/or cooked and a steam cooker accessory (104) designed to rest on the container (102) and to heat and/or steam-cook the food contained in the container (102), **characterised in that** the steam cooker accessory (104) is as claimed in any one of claims 1 to 7.
